# EUROPEAN PATENT APPLICATION

(11) **EP 4 804 259 A1**
(43) Date of publication of application: **09.09.2026**
(21) Application number: 24914967.5
(22) Date of filing: 23.10.2024
(51) Int. Cl.: H01M 4/66

(54) **NEGATIVE ELECTRODE CURRENT COLLECTOR, BATTERY CELL, BATTERY AND ELECTRIC DEVICE**

(30) Priority: 02.01.2024 CN 202410004799
(71) Applicant: CONTEMPORARY AMPEREX TECHNOLOGY (HONG KONG) LIMITED, Hong Kong (HK)
(72) Inventor: ZHANG, Shuaiqi, Ningde, Fujian 352100 (CN); MA, Li, Ningde, Fujian 352100 (CN); GUAN, Wenhao, Ningde, Fujian 352100 (CN); ZHONG, Wei, Ningde, Fujian 352100 (CN); GE, Xiaoming, Ningde, Fujian 352100 (CN)
(74) Representative: Lorenz Seidler Gossel Part. mbB
(86) International application number: PCT/CN2024/126831
(87) International publication number: WO 2025/145750

(57) **Abstract**

The present application discloses a negative electrode current collector, a battery cell, a battery, and an electric apparatus. The negative electrode current collector includes a substrate and an alloy layer located on at least one side of the substrate, where the alloy layer includes a first metal element and a second metal element, the substrate includes a third metal element, the nucleation overpotential of the elemental form of the second metal element is less than the nucleation overpotential of the elemental form of the first metal element, the nucleation overpotential for lithium metal on the elemental form of the first metal element is greater than or equal to 0.10 V, and the nucleation overpotential of the elemental form of the second metal element is less than the nucleation overpotential of the elemental form of the third metal element. The present application enables the battery to have high coulombic efficiency, high reliability, and long cycle life.

## Description

### CROSS-REFERENCE TO RELATED APPLICATIONS

The present application claims priority to Chinese Patent Application No. 202410004799.5, filed on January 2, 2024, and entitled "NEGATIVE ELECTRODE CURRENT COLLECTOR, BATTERY CELL, BATTERY, AND ELECTRIC APPARATUS," which is incorporated herein by reference in its entirety.

### TECHNICAL FIELD

The present application relates to a negative electrode current collector, a battery cell, a battery, and an electric apparatus.

### BACKGROUND

Compared to ionic batteries, metallic batteries can have higher energy density. However, unlike the negative electrode of an ionic battery, the negative electrode of a metallic battery suffers from uneven deposition issues. Setting a coating layer with better affinity to the deposited metal on the surface of the negative electrode current collector of the metallic battery helps regulate the deposition behavior of the deposited metal. However, the currently used coatings are prone to detachment during long-term cycling of the battery, thereby affecting the reliability and electrochemical performance of the metallic battery.

### SUMMARY

The present application provides a negative electrode current collector, a battery cell, a battery, and an electric apparatus, which enable the battery to have high coulombic efficiency, high reliability, and long cycle life.

In a first aspect, the present application provides a negative electrode current collector including a substrate and an alloy layer located on at least one side of the substrate, where the alloy layer includes a first metal element and a second metal element, the substrate includes a third metal element, the nucleation overpotential of the elemental form of the second metal element is less than the nucleation overpotential of the elemental form of the first metal element, the nucleation overpotential for lithium metal on the elemental form of the first metal element is greater than or equal to 0.10 V, and the nucleation overpotential of the elemental form of the second metal element is less than the nucleation overpotential of the elemental form of the third metal element.

In embodiments of the present application, by disposing an alloy layer on the substrate of the negative electrode current collector and including a second metal element with a nucleation overpotential less than that of the substrate in the alloy layer, the second metal element in the alloy layer can provide a large number of active sites during battery charging, inducing uniform metal deposition, and can also form an alloy with the deposited metal, thereby reducing the nucleation overpotential of the negative electrode current collector, suppressing localized nucleation, and slowing dendrite growth. The alloy layer also includes a first metal element with a nucleation overpotential for lithium metal greater than or equal to 0.10 V, whereby the first metal element mainly serves as an inert skeleton in the alloy layer and hardly participates in reactions, thereby acting as a framework in the alloy layer to limit the volume expansion caused by the second metal element forming an alloy with the deposited metal during battery charging. This can reduce the risk of overall detachment of the alloy layer due to volume expansion, reduced internal porosity of the battery, deteriorated electrolyte solution wettability, deteriorated alkali metal deposition and stripping activity, and the like. Therefore, the negative electrode current collector provided in the embodiments of the present application can reduce active ion loss during battery cycling, enhancing the cycling stability, coulombic efficiency, and reliability of the battery.

Additionally, since the alloy layer simultaneously includes a second metal element with a nucleation overpotential less than that of the substrate and a first metal element with a nucleation overpotential for lithium metal greater than or equal to 0.10 V, active ion loss during the first charge of the battery can also be reduced, improving the first-cycle coulombic efficiency of the battery.

Therefore, the negative electrode current collector provided in the embodiments of the present application enables the battery to have high coulombic efficiency, high reliability, and long cycle life.

In some embodiments, the first metal element is the same as the third metal element.

When the first metal element is the same as the third metal element, the bonding strength between materials of the same type is stronger, thereby further increasing the adhesion between the alloy layer and the substrate, enabling the alloy layer to more stably cover the substrate surface and reducing the risk of alloy layer detachment, while further improving the coulombic efficiency and cycle life of the battery.

In some embodiments, the nucleation overpotential for lithium metal on the elemental form of the first metal element is 0.10 V to 0.50 V, optionally 0.10 V to 0.35 V.

In some embodiments, the nucleation overpotential for lithium metal on the elemental form of the second metal element is less than 0.10 V, optionally 0.030 V to 0.095 V.

In some embodiments, the nucleation overpotential for lithium metal on the elemental form of the third metal element is 0.10 V to 0.50 V, optionally 0.10 V to 0.35 V.

In some embodiments, the nucleation overpotential for lithium metal on the elemental form of the first metal element is denoted as V₁, and the nucleation overpotential for lithium metal on the elemental form of the second metal element is denoted as V₂, where 0 V < V₁ - V₂ ≤ 0.47 V, optionally 0.05 V ≤ V₁ - V₂ ≤ 0.30 V.

In some embodiments, the nucleation overpotential for lithium metal on the elemental form of the second metal element is denoted as V₂, and the nucleation overpotential for lithium metal on the elemental form of the third metal element is denoted as V₃, where 0 V < V₃ - V₂ ≤ 0.47 V, optionally 0.05 V ≤ V₃ - V₂ ≤ 0.30 V.

In some embodiments, a weight content of the first metal element in the alloy layer is 50 wt% to 90 wt%, and a weight content of the second metal element is 10 wt% to 50 wt%, optionally the weight content of the first metal element in the alloy layer is 60 wt% to 70 wt%, and the weight content of the second metal element is 30 wt% to 40 wt%.

By adjusting the weight contents of the first metal element and the second metal element in the alloy layer within the above ranges, the synergistic effects of the first metal element and the second metal element can be better realized, thereby enabling the battery to have high coulombic efficiency, high reliability, and long cycle life.

In some embodiments, an areal density of the alloy layer is 10 g/m² to 30 g/m², optionally 15 g/m² to 25 g/m².

By adjusting the areal density of the alloy layer within the above range, the effects of the second metal in increasing active sites, reducing nucleation overpotential, suppressing localized nucleation, and slowing dendrite growth, as well as the framework role of the first metal element, can be better realized, thereby enabling the battery to have better cycling performance and reliability. In addition, the battery can maintain high coulombic efficiency. As the areal density of the alloy layer increases, the weight of the second metal in the alloy layer increases, which results in partial irreversible consumption of active ions.

In some embodiments, a ratio of an atomic radius of the first metal element to an atomic radius of the second metal element is (0.70 to 1.15):1, optionally (0.75 to 0.95):1.

Since the atomic radius of the second metal element is close to the atomic radius of the first metal element, the inert skeleton formed by the first metal element can better maintain structural stability and reduce the risk of collapse, thereby enabling the alloy layer to more stably cover the substrate surface, further improving the coulombic efficiency, reliability, and cycle life of the battery.

In some embodiments, the first metal element includes one or more of Fe, Ni, or Cu, optionally Cu.

In some embodiments, the second metal element includes one or more of Zn, Ag, Mg, Be, Ga, In, Ge, Sb, Sn, Pb, As, Te, or Bi, optionally including one or more of Zn, Ga, Ge, or Sb.

In some embodiments, the third metal element includes one or more of Fe, Ni, or Cu, optionally Cu.

In some embodiments, the substrate includes one or more of a metal foil, a metal foam substrate, a metal mesh substrate, or a composite substrate, where the composite substrate includes a polymer material base layer and a metal layer formed on at least one side of the polymer material base layer, and the metal layer includes the third metal element.

In a second aspect, the present application provides a battery cell including the negative electrode current collector according to the first aspect of the present application.

In some embodiments, the battery cell includes at least one of a negative electrode-free lithium metal battery cell or a negative electrode-free sodium metal battery cell.

In a third aspect, the present application provides a battery including the battery cell according to the second aspect of the present application.

In a fourth aspect, the present application provides an electric apparatus including the battery according to the third aspect of the present application, where the battery is used to supply electrical energy.

The electric apparatus of the present application includes the battery provided by the present application, thus having at least the same advantages as the battery.

### BRIEF DESCRIPTION OF DRAWINGS

To more clearly illustrate the technical solutions of the embodiments of the present application, the drawings required for use in the embodiments of the present application are briefly introduced below. It is evident that the drawings described below are merely some embodiments of the present application, and those of ordinary skill in the art can obtain other drawings based on these drawings without creative effort.
FIG. 1 is a schematic diagram of a battery cell according to some embodiments of the present application.
FIG. 2 is an exploded schematic diagram of a battery cell according to some embodiments of the present application.
FIG. 3 shows a schematic diagram of a battery module according to some embodiments of the present application.
FIG. 4 shows a schematic diagram of a battery pack according to some embodiments of the present application.
FIG. 5 is an exploded schematic diagram of the battery pack shown in FIG. 4.
FIG. 6 shows a schematic diagram of an electric apparatus according to some embodiments of the present application.

In the drawings, the drawings are not necessarily drawn to actual scale.

Description of reference signs: 1. battery pack; 2. upper enclosure; 3. lower enclosure; 4. battery module; 5. battery cell; 51. casing; 52. electrode assembly; and 53. cover plate.

### DESCRIPTION OF EMBODIMENTS

Hereinafter, embodiments specifically disclosing the negative electrode current collector, battery cell, battery, and electric apparatus of the present application will be described in detail with appropriate reference to the drawings. However, unnecessary detailed descriptions may be omitted in some cases. For example, detailed descriptions of well-known matters or repeated descriptions of substantially identical structures may be omitted. This is to avoid unnecessarily lengthy descriptions and to facilitate understanding by those skilled in the art. Additionally, the drawings and the following description are provided to enable those skilled in the art to fully understand the present application and are not intended to limit the subject matter recited in the claims.

The "ranges" disclosed in the present application are defined in the form of lower and upper limits, where a given range is defined by selecting a lower limit and an upper limit, and the selected lower and upper limits define the boundaries of a particular range. Ranges defined in this manner may include or exclude endpoints and can be arbitrarily combined, meaning any lower limit can be combined with any upper limit to form a range. For example, if ranges of 60-120 and 80-110 are listed for a specific parameter, it is understood that ranges of 60-110 and 80-120 are also contemplated. Additionally, if minimum range values of 1 and 2 are listed, and maximum range values of 3, 4, and 5 are listed, the following ranges are all contemplated: 1-3, 1-4, 1-5, 2-3, 2-4, and 2-5. In the present application, unless otherwise stated, the numerical range "a-b" represents a shorthand notation for any combination of real numbers between a and b, where both a and b are real numbers. For example, the numerical range "0-5" means that all real numbers between "0-5" have been listed herein, and "0-5" is merely a shorthand notation for these numerical combinations. Additionally, when a parameter is expressed as an integer ≥2, it is equivalent to disclosing that the parameter is, for example, an integer of 2, 3, 4, 5, 6, 7, 8, 9, 10, 11, 12, and so on.

Unless otherwise specified, all embodiments and optional embodiments of the present application can be combined with each other to form new technical solutions, and such technical solutions should be considered included in the disclosure of the present application.

Unless otherwise specified, all technical features and optional technical features of the present application can be combined with each other to form new technical solutions, and such technical solutions should be considered included in the disclosure of the present application.

Unless otherwise specified, all steps in the present application can be performed sequentially or randomly, preferably sequentially. For example, a method including steps (a) and (b) indicates that the method may include steps (a) and (b) performed sequentially, or steps (b) and (a) performed sequentially. For example, if it is mentioned that the method may further include step (c), it means that step (c) can be added to the method in any order, for example, the method may include steps (a), (b), and (c), or steps (a), (c), and (b), or steps (c), (a), and (b).

In the present application, the terms "multiple" or "various" refer to two or more.

In the description of the embodiments of the present application, unless otherwise specified, a first feature being "on" or "under" a second feature may mean that the first and second features are in direct contact, or that the first and second features are in indirect contact through an intermediate medium. Moreover, a first feature being "above," "over," or "on top of" a second feature may mean that the first feature is directly above or obliquely above the second feature, or merely that the horizontal height of the first feature is greater than that of the second feature. A first feature being "below," "under," or "beneath" a second feature may mean that the first feature is directly below or obliquely below the second feature, or merely that the horizontal height of the first feature is less than that of the second feature.

Unless otherwise specified, the terms used in the present application have the commonly understood meanings in the art.

Unless otherwise specified, the numerical values of the parameters mentioned in the present application can be measured using various test methods commonly used in the art, for example, they can be measured according to the test methods provided in the embodiments of the present application. Unless otherwise specified, the test temperature for each parameter is 25°C.

The battery mentioned in the embodiments of the present application may be a single physical module including one or more battery cells to provide higher voltage and capacity. For example, the battery mentioned in the present application may include a battery cell, a battery module, or a battery pack, or the like.

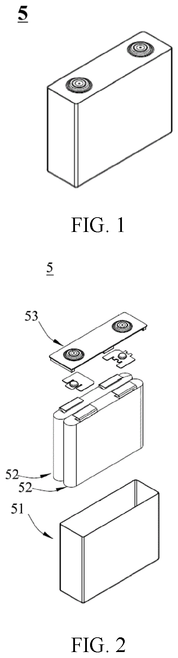

A battery cell is the smallest unit constituting a battery, capable of independently performing charge and discharge functions. The battery cell may be cylindrical, prismatic, or other shapes, which are not limited by the embodiments of the present application. FIG. 1 shows a battery cell 5 with a prismatic structure as an example.

When there are multiple battery cells, the multiple battery cells are connected in series, parallel, or a combination thereof through a busbar component. In some embodiments, the battery may be a battery module; when there are multiple battery cells, the multiple battery cells are arranged and fixed to form a battery module. In some embodiments, the battery may be a battery pack, which includes an enclosure and battery cells, with the battery cells or battery modules accommodated in the enclosure. In some embodiments, the enclosure may form part of the chassis structure of a vehicle. For example, a part of the enclosure may form at least a portion of the chassis of the vehicle, or a part of the enclosure may form at least a portion of the crossbeams and longitudinal beams of the vehicle.

In some embodiments, the battery may be an energy storage device. The energy storage device includes an energy storage container, an energy storage cabinet, and the like.

The battery cell includes an electrode assembly. The electrode assembly may have a wound structure or a stacked structure, which is not limited by the embodiments of the present application.

The battery cell may further include an outer package, which can be used to encapsulate the electrode assembly. The outer package may be a hard shell, such as a hard plastic shell, aluminum shell, or steel shell. The outer package may also be a soft pouch, such as a pouch-type soft package. The material of the soft pouch may be plastic, such as one or more of polypropylene, polybutylene terephthalate (PBT), or polybutylene succinate (PBS).

In some embodiments, as shown in FIG. 2, the outer package may include a casing 51 and a cover plate 53. The casing 51 may include a bottom plate and side plates connected to the bottom plate, with the bottom plate and side plates enclosing a receiving cavity. The casing 51 has an opening communicating with the receiving cavity, and the cover plate 53 is used to cover the opening to seal the receiving cavity. The electrode assembly 52 is encapsulated in the receiving cavity. The number of electrode assemblies 52 contained in the battery cell 5 may be one or more, adjustable according to requirements.

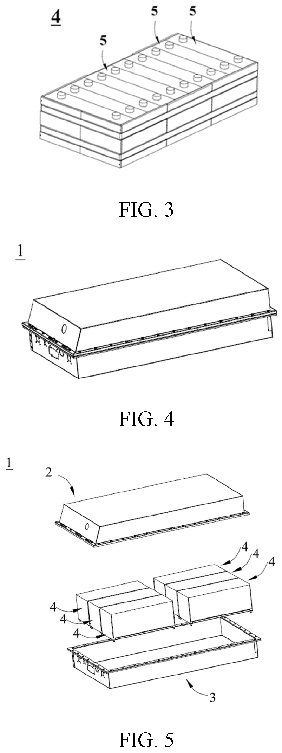

In some embodiments, battery cells can be assembled into a battery module, and the number of battery cells in the battery module may be multiple, with the specific number adjustable based on the application and capacity of the battery module. FIG. 3 is a schematic diagram of a battery module 4 as an example. As shown in FIG. 3, in the battery module 4, multiple battery cells 5 may be arranged sequentially along the length direction of the battery module 4. Alternatively, they may be arranged in any other manner. The multiple battery cells 5 may further be fixed by fasteners.

Optionally, the battery module 4 may further include a housing with an accommodating space, in which the multiple battery cells 5 are accommodated.

In some embodiments, the above battery module may be further assembled into a battery pack, and the number of battery modules in the battery pack may be adjusted based on the application and capacity of the battery pack.

FIG. 4 and FIG. 5 are schematic diagrams of a battery pack 1 as an example. As shown in FIG. 4 and FIG. 5, the battery pack 1 may include an enclosure and multiple battery modules 4 disposed within the enclosure. The enclosure includes an upper enclosure 2 and a lower enclosure 3, where the upper enclosure 2 is used to cover the lower enclosure 3, forming a closed space for accommodating the battery modules 4. The multiple battery modules 4 can be arranged in any manner within the enclosure.

The battery cells provided in the embodiments of the present application may be metallic battery cells, for example, including at least one of a negative electrode-free lithium metal battery cell or a negative electrode-free sodium metal battery cell.

A negative electrode-free battery cell generally refers to a battery cell constructed without actively providing a negative electrode active material layer on the negative electrode side during the manufacturing process of the battery cell, for example, without forming a negative electrode active material layer by coating or depositing a layer or a carbonaceous active material layer at the negative electrode during the manufacturing process of the battery cell. During the first charge, ions gain electrons at the negative electrode side and deposit on the surface of the negative electrode current collector to form a metal, and during discharge, the metal can transform back into ions and return to the positive electrode, achieving cyclic charge and discharge. Compared to other battery cells, negative electrode-free battery cells can achieve higher energy density due to the absence of a negative electrode active material layer. The CB (Cell Balance) value of negative electrode-free battery cells is typically very small. For example, in some embodiments, the CB value of a negative electrode-free battery cell may be less than or equal to 0.1. The CB value is the ratio of the capacity per unit area of the negative electrode to the capacity per unit area of the positive electrode in a battery cell. Since negative electrode-free battery cells contain no or only a small amount of negative electrode active material, the capacity per unit area of the negative electrode is small, resulting in a low CB value, typically less than or equal to 0.1.

Embodiments of the present application provide a negative electrode current collector.

The negative electrode current collector includes a substrate and an alloy layer located on at least one side of the substrate, where the alloy layer includes a first metal element and a second metal element, the substrate includes a third metal element, the nucleation overpotential of the elemental form of the second metal element is less than the nucleation overpotential of the elemental form of the first metal element, the nucleation overpotential for lithium metal on the elemental form of the first metal element is greater than or equal to 0.10 V, and the nucleation overpotential of the elemental form of the second metal element is less than the nucleation overpotential of the elemental form of the third metal element.

The wettability of alkali metals such as lithium and sodium on conventional negative electrode current collectors is poor, leading to high nucleation overpotential and insufficient nucleation sites on conventional negative electrode current collectors. Alkali metals such as lithium and sodium tend to preferentially nucleate at certain surface defect sites on conventional negative electrode current collectors. The preferential nucleation sites form dominant growth points, leading to local metal deposition and dendrite formation. Dendrites affect the reliability of the battery and impact the cycling performance of the battery.

In the embodiments of the present application, by disposing an alloy layer on the substrate of the negative electrode current collector and including a second metal element with a nucleation overpotential less than that of the substrate in the alloy layer, the second metal element in the alloy layer can provide a large number of active sites during battery charging, inducing uniform metal deposition, and can also form an alloy with the deposited metal, thereby reducing the nucleation overpotential of the negative electrode current collector, suppressing localized nucleation, and slowing dendrite growth. The alloy layer also includes a first metal element with a nucleation overpotential for lithium metal greater than or equal to 0.10 V, whereby the first metal element mainly serves as an inert skeleton in the alloy layer and hardly participates in reactions, thereby acting as a framework in the alloy layer to limit the volume expansion caused by the second metal element forming an alloy with the deposited metal during battery charging. This can reduce the risk of overall detachment of the alloy layer due to volume expansion, reduced internal porosity of the battery, deteriorated electrolyte solution wettability, deteriorated alkali metal deposition and stripping activity, and the like. Therefore, the negative electrode current collector provided in the embodiments of the present application can reduce active ion loss during battery cycling, enhancing the cycling stability, coulombic efficiency, and reliability of the battery.

Additionally, since the alloy layer simultaneously includes a second metal element with a nucleation overpotential less than that of the substrate and a first metal element with a nucleation overpotential for lithium metal greater than or equal to 0.10 V, active ion loss during the first charge of the battery can also be reduced, improving the first-cycle coulombic efficiency of the battery.

Therefore, the negative electrode current collector provided in the embodiments of the present application enables the battery to have high coulombic efficiency, high reliability, and long cycle life.

In some embodiments, the first metal element may be the same as the third metal element.

When the first metal element is the same as the third metal element, the bonding strength between materials of the same type is stronger, thereby further increasing the adhesion between the alloy layer and the substrate, enabling the alloy layer to more stably cover the substrate surface and reducing the risk of alloy layer detachment, while further improving the coulombic efficiency and cycle life of the battery.

In some embodiments, the nucleation overpotential for lithium metal on the elemental form of the first metal element may be 0.10 V to 0.50 V, optionally 0.10 V to 0.35 V.

In some embodiments, the nucleation overpotential for lithium metal on the elemental form of the second metal element may be less than 0.10 V, optionally 0.030 V to 0.095 V.

In some embodiments, the nucleation overpotential for lithium metal on the elemental form of the third metal element may be greater than or equal to 0.10 V, optionally 0.10 V to 0.50 V, more optionally 0.10 V to 0.35 V.

The nucleation overpotential of the elemental form of the first metal element, the second metal element, and the third metal element can be measured according to the following method: In a glove box filled with argon, a metal lithium sheet is used as the counter electrode and assembled with a metal elemental sheet corresponding to the first (second or third) metal element into a coin cell. The electrolyte salt of the electrolyte solution is LiFSI with a concentration of 1 mol/L, and the solvent of the electrolyte solution is a mixed solvent of dimethoxyethane (DME) and 1,1,2,2-tetrafluoroethyl-2,2,3,3-tetrafluoropropyl ether (TTE) in a weight ratio of 1:1. The separator is a PE film with a thickness of 12 µm.

At 25°C, the assembled coin cell is left to stand for 12 h, and then discharged at a constant current density of 1 mA/cm² until a capacity of 1 mAh/cm² is reached. At the start of the lithium metal deposition process, a noticeable voltage drop occurs, followed by a flat voltage plateau. The difference (absolute value herein) between the voltage at the lowest point and the flat portion of the voltage plateau is taken as the nucleation overpotential for lithium metal on the elemental form of the first (second or third) metal element.

It should be noted that the specific values of the nucleation overpotential for lithium metal on the elemental form of the above first (second or third) metal element are used to represent the physicochemical properties of the first (second or third) metal element and the affinity of the first (second or third) metal element with the deposited metal. These values do not imply that the negative electrode current collector provided in the embodiments of the present application can only be used in negative electrode-free lithium metal battery cells. The negative electrode current collector provided in the embodiments of the present application can also be used in negative electrode-free sodium metal battery cells.

In some embodiments, the nucleation overpotential for lithium metal on the elemental form of the first metal element is denoted as V₁, and the nucleation overpotential of the elemental form of the second metal element is denoted as V₂, where 0 V < V₁ - V₂ ≤ 0.47 V, optionally 0.05 V ≤ V₁ - V₂ ≤ 0.30 V.

In some embodiments, the nucleation overpotential of the elemental form of the second metal element is denoted as V₂, and the nucleation overpotential for lithium metal on the elemental form of the third metal element is denoted as V₃, where 0 V < V₃ - V₂ ≤ 0.47 V, optionally 0.05 V ≤ V₃ - V₂ ≤ 0.30 V.

In some embodiments, a weight content of the first metal element in the alloy layer may be 50 wt% to 90 wt%, and a weight content of the second metal element may be 10 wt% to 50 wt%.

During battery charge and discharge, the first metal in the alloy layer mainly serves as a framework, while the second metal is mainly used to provide active sites, reduce nucleation overpotential, suppress localized nucleation, and slow dendrite growth. The second metal can also form an alloy with the deposited metal, which causes certain volume expansion in the alloy layer.

When the content of the first metal element in the alloy layer is low and the content of the second metal element is high, the framework role of the first metal in the alloy layer may not effectively limit the volume expansion caused by the second metal forming an alloy with the deposited metal. Thus, during long-term cycling charge and discharge of the battery, the alloy layer still risks detachment. Moreover, since the alloy layer still exhibits significant overall volume expansion, issues such as the decreased internal porosity, the deteriorated wettability of the electrolyte solution, and the reduced alkali metal deposition and stripping activity may occur in the battery. In addition, when the content of the second metal element is high, a portion of the active ions may also be irreversibly consumed. Therefore, when the content of the first metal element in the alloy layer is low and the content of the second metal element is high, the cycling stability, coulombic efficiency, and reliability of the battery are reduced.

When the content of the first metal element is high and the content of the second metal element is low in the alloy layer, the number of active sites that the second metal in the alloy layer can provide is small, and thus the effect of suppressing localized nucleation and slowing dendrite growth is not appropriately achieved. Therefore, when the content of the first metal element in the alloy layer is high and the content of the second metal element is low, the cycling stability, coulombic efficiency, and reliability of the battery are also decrease.

By adjusting the weight contents of the first metal element and the second metal element in the alloy layer within the above ranges, the synergistic effects of the first metal element and the second metal element can be better realized, thereby enabling the battery to have high coulombic efficiency, high reliability, and long cycle life.

Optionally, the weight content of the first metal element in the alloy layer may be 60 wt% to 70 wt%, and the weight content of the second metal element may be 30 wt% to 40 wt%. This can further improve the coulombic efficiency, reliability, and cycle life of the battery.

In some embodiments, the areal density of the alloy layer may be 10 g/m² to 30 g/m², optionally 15 g/m² to 25 g/m².

By adjusting the areal density of the alloy layer within the above range, the effects of the second metal in increasing active sites, reducing nucleation overpotential, suppressing localized nucleation, and slowing dendrite growth, as well as the framework role of the first metal element, can be better realized, thereby enabling the battery to have better cycling performance and reliability. In addition, the battery can maintain high coulombic efficiency. As the areal density of the alloy layer increases, the weight of the second metal in the alloy layer increases, which results in partial irreversible consumption of active ions.

In some embodiments, the ratio of the atomic radius of the first metal element to the atomic radius of the second metal element may be (0.70 to 1.15):1, optionally (0.75 to 0.95):1.

The second metal element in the alloy layer can provide active sites to enable uniform deposition of alkali metals, thereby suppressing localized nucleation and slowing dendrite growth, and the second metal element is uniformly distributed within the inert skeleton formed by the first metal element. Therefore, when the second metal element reacts with the deposited metal, since the atomic radius of the second metal element is close to the atomic radius of the first metal element, the inert skeleton formed by the first metal element can better maintain structural stability and reduce the risk of collapse, thereby enabling the alloy layer to more stably cover the substrate surface, further improving the coulombic efficiency, reliability, and cycle life of the battery.

In some embodiments, the first metal element may include one or more of Fe, Ni, or Cu, optionally Cu.

In some embodiments, the second metal element may include one or more of Zn, Ag, Mg, Be, Ga, In, Ge, Sb, Sn, Pb, As, Te, or Bi, optionally including one or more of Zn, Ga, Ge, or Sb.

In some embodiments, the third metal element may include one or more of Fe, Ni, or Cu, optionally Cu.

In some embodiments, the first metal element and the third metal element may both be Cu.

In some embodiments, the alloy layer may be provided on the substrate surface by magnetron sputtering, chemical plating, electroplating, or spraying. Optionally, the alloy layer may be provided on the substrate surface by magnetron sputtering. Compared to other methods, magnetron sputtering is simpler, faster, and more convenient to operate, and the adhesion between the alloy layer formed by magnetron sputtering and the substrate is higher, and the stability of the alloy layer is better.

In some embodiments, the substrate may include one or more of a metal foil, a metal foam substrate, a metal mesh substrate, or a composite substrate.

The composite substrate may include a polymer material base layer and a metal layer formed on at least one side of the polymer material base layer, where the metal layer includes the third metal element.

Optionally, the substrate may include copper foil or nickel foil, more optionally copper foil.

### [Positive Electrode Plate]

The battery cell includes a positive electrode plate.

In some embodiments, the positive electrode plate includes a positive electrode current collector and a positive electrode film layer disposed on at least one surface of the positive electrode current collector and including a positive electrode active material. For example, the positive electrode current collector has two surfaces opposite in its thickness direction, and the positive electrode film layer is disposed on either or both of the two opposite surfaces of the positive electrode current collector.

In some embodiments, the positive electrode active material includes materials capable of deintercalating and intercalating lithium.

In an example, the positive electrode active material may include, but is not limited to, one or more of lithium transition metal oxides, metal chalcogenides, lithium-containing phosphates, or their respective modified compounds. Examples of lithium transition metal oxides may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, lithium titanium oxide, or their respective modified compounds. Lithium transition metal oxides may include, but are not limited to, laminar structures or spinel structures. Examples of lithium-containing phosphates may include, but are not limited to, one or more of lithium iron phosphate, a composite material of lithium iron phosphate and carbon, lithium manganese phosphate, a composite material of lithium manganese phosphate and carbon, lithium manganese iron phosphate, a composite material of lithium manganese iron phosphate and carbon, and modified compounds thereof.

In some embodiments, to further enhance the energy density of the battery, the positive electrode active material may include one or more of lithium transition metal oxides represented by the general formula LiₐNi_{b}Co_{c}M_{d}OₑD_{f} or their modified compounds, where 0.8 ≤ a ≤ 1.2, 0.5 ≤ b < 1, 0 < c < 1, 0 < d < 1, 1 ≤ e ≤ 2, 0 ≤ f ≤ 1, M may include, but is not limited to, one or more of Ge, Mo, Sn, Mn, Al, Zr, Zn, Cu, Cr, Mg, Fe, V, Ti, or B, and D may include, but is not limited to, one or more of N, F, S, or Cl.

In some embodiments, the positive electrode active material may include both lithium transition metal oxides and lithium-containing phosphates. This configuration facilitates obtaining a battery that offers both high capacity and high reliability.

In an example, the positive electrode active material may include, but is not limited to, one or more of LiCoO₂, LiNiO₂, LiMnO₂, LiNi_{1/2}Mn_{1/2}O₂, LiMn₂O₄, Li_{4/3}Ti_{5/3}O₄, LiNi_{1/2}Mn_{1/2}O₂, LiNi_{1/3}Co_{1/3}Mn_{1/3}O₂ (NCM333), LiNi_{0.5}Co_{0.2}Mn_{0.3}O₂ (NCM523), LiNi_{0.6}Co_{0.2}Mn_{0.2}O₂ (NCM622), LiNi_{0.8}Co_{0.1}Mn_{0.1}O₂ (NCM811), LiNi_{0.80}Co_{0.15}Al_{0.05}O₂, LiFePO₄, LiMnPO₄, or Li_{1.13}Ti_{0.57}Fe_{0.3}S₂.

The charging and discharging of the battery cell are accompanied by deintercalation and consumption of Li, and the molar concentration of Li varies when the battery cell is discharged to different states. In the embodiments of the present application, in the listing of positive electrode active materials, the molar concentration of Li refers to the initial state of the material, that is, the state before feeding. When the positive electrode active material is applied in a battery cell, the molar concentration of Li may change after charge and discharge cycles. In the examples of positive electrode active materials in the embodiments of the present application, the molar concentration of O is only a theoretical value, lattice oxygen release may cause variations in the molar concentration of O, and the actual molar concentration of O may fluctuate.

In some embodiments, the positive electrode active material includes materials capable of deintercalating and intercalating sodium. For example, the positive electrode active material may include, but is not limited to, one or more of laminar transition metal oxides (including but not limited to P2-type or O3-type), polyanionic materials (such as phosphates, fluorophosphates, pyrophosphates, and sulfates), or Prussian-type materials.

In some embodiments, in an example, the positive electrode active material may include, but is not limited to, one or more of NaFeO₂, NaCoO₂, NaCrO₂, NaMnO₂, NaNiO₂, Na_{0.67}MO₂ (where M includes at least two of Fe, Co, Cr, Mn, Ni, V, Ti, or Mo), NaMO₂ (where M includes at least two of Fe, Co, Ni, V, Ti, or Mo), NaFePO₄, NaMnPO₄, NaCoPO₄, Na₄Fe₃(PO₄)₂O₇, Na₃V₂(PO₄)₂F₃, Na₃V₂(PO₄)₃, Prussian blue, Prussian white, or their respective modified compounds.

The modified compounds of the above positive electrode active materials may involve doping modification and/or surface coating modification of the positive electrode active materials.

In some embodiments, the positive electrode film layer may optionally further include a positive electrode conductive agent. In an example, the positive electrode conductive agent may include, but is not limited to, one or more of superconducting carbon, conductive graphite, acetylene black, carbon black, Ketjen black, carbon dots, carbon nanotubes, graphene, or carbon nanofibers.

In some embodiments, the positive electrode film layer may optionally further include a positive electrode binder. In an example, the positive electrode binder may include, but is not limited to, one or more of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, polyethylene oxide, fluorinated acrylate resin, styrene-butadiene rubber (SBR), water-soluble unsaturated resin SR-1B, water-based acrylic resin (for example, polyacrylic acid PAA, polymethacrylic acid PMAA, sodium polyacrylate PAAS), polyacrylamide (PAM), polyvinyl alcohol (PVA), sodium alginate (SA), or carboxymethyl chitosan (CMCS).

In some embodiments, the positive electrode current collector may be a metal foil or a composite current collector. As an example of a metal foil, aluminum foil may be used. The composite current collector may include a polymer material base layer and a metallic material layer formed on at least one surface of the polymer material base layer. In an example, the metallic material may include, but is not limited to, one or more of aluminum, aluminum alloy, nickel, nickel alloy, titanium, titanium alloy, silver, or silver alloy. In an example, the polymer material base layer may include, but is not limited to, one or more of polypropylene, polyethylene terephthalate (PET), polybutylene terephthalate (PBT), polystyrene (PS), or polyethylene (PE).

The positive electrode film layer is typically formed by coating a positive electrode slurry on the positive electrode current collector, followed by drying and cold pressing. The positive electrode slurry is generally formed by dispersing the positive electrode active material, an optional positive electrode conductive agent, an optional positive electrode binder, and any other components in a solvent and stirring them until the mixture is uniform. The solvent may be N-methylpyrrolidone (NMP), but is not limited thereto.

### [Electrolyte]

The battery cell includes an electrolyte.

In some embodiments, the electrolyte is an electrolyte solution, which includes an electrolyte salt and an organic solvent.

In some embodiments, the electrolyte solution includes anions, which may include one or more of bis(fluorosulfonyl)imide anion (FSI⁻), bis(trifluoromethanesulfonyl)imide anion (TFSI⁻), bis(oxalato)borate anion (BOB⁻), difluoro(oxalato)borate anion (DFOB⁻), difluorobis(oxalato)phosphate anion (DFOP⁻), tetrafluoro(oxalato)phosphate anion (TFOP⁻), difluorophosphate anion (PO₂F₂⁻), hexafluorophosphate anion (PF₆⁻), tetrafluoroborate anion (BF₄⁻), hexafluoroarsenate anion (AsF₆⁻), or trifluoromethanesulfonate anion (CF₃SO₃⁻).

In some embodiments, the electrolyte solution includes cations, which may include one or more of lithium ions or sodium ions.

In some embodiments, a concentration of the electrolyte salt may be 0.3 mol/L or higher, optionally 0.7 mol/L or higher. Further, the concentration of the electrolyte salt may be 4 mol/L or lower, optionally 2.5 mol/L or lower, or 1.7 mol/L or lower. The electrolyte salt having a concentration within the above range enables the electrolyte solution to have appropriate ionic conductivity.

The organic solvent may include, but is not limited to, one or more of esters, ethers, sulfones, or nitriles. Esters may include, but are not limited to, one or more of carbonates, phosphates, carboxylates, sulfates, or sulfonates. Carbonates may include cyclic carbonates and/or linear carbonates, optionally including both cyclic carbonates and linear carbonates. Linear carbonates may include low-viscosity polar linear carbonates, aliphatic branched carbonates, and the like.

In an example, the organic solvent may include, but is not limited to, one or more of ethylene carbonate (EC), propylene carbonate (PC), butylene carbonate, ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), methyl ethyl sulfone (EMS), diethyl sulfone (ESE), tetraethylene glycol dimethyl ether (TEGDME), dimethoxyethane (DME), 1,1,2,2-tetrafluoroethyl-2,2,3,3-tetrafluoropropyl ether (TTE), 1,3-dioxolane (DOL), trimethyl phosphate, 3-methoxypropionitrile, H(CF₂)₂OCH₃, C₄F₉OCH₃, H(CF₂)₂OCH₂CH₃, H(CF₂)₂OCH₂CF₃, H(CF₂)₂CH₂O(CF₂)₂H, CF₃CHFCF₂OCH₃, CF₃CHFCF₂OCH₂CH₃, 2-trifluoromethyl hexafluoropropyl methyl ether, 2-trifluoromethyl hexafluoropropyl ethyl ether, 2-trifluoromethyl hexafluoropropyl propyl ether, 3-trifluoromethyl octafluorobutyl methyl ether, 3-trifluoromethyl octafluorobutyl ethyl ether, 3-trifluoromethyl octafluorobutyl propyl ether, 4-trifluoromethyl decafluoropentyl methyl ether, 4-trifluoromethyl decafluoropentyl ethyl ether, 4-trifluoromethyl decafluoropentyl propyl ether, 5-trifluoromethyl dodecafluorohexyl methyl ether, 5-trifluoromethyl dodecafluorohexyl ethyl ether, 5-trifluoromethyl dodecafluorohexyl propyl ether, 6-trifluoromethyl tetradecafluoroheptyl methyl ether, 6-trifluoromethyl tetradecafluoroheptyl ethyl ether, 6-trifluoromethyl tetradecafluoroheptyl propyl ether, 7-trifluoromethyl hexadecafluorooctyl methyl ether, 7-trifluoromethyl hexadecafluorooctyl ethyl ether, or 7-trifluoromethyl hexadecafluorooctyl propyl ether.

In some embodiments, the electrolyte solution may optionally further include additives. For example, the additives may include a negative electrode film-forming additives, a positive electrode film-forming additives, or an additive capable of improving certain properties of batteries, such as an additive for improving overcharge performance of batteries, an additive for improving high-temperature performance of batteries, or an additive for improving low-temperature power performance of batteries.

### [Separator]

The battery cell may further include a separator. The separator is located between the positive electrode and the negative electrode, primarily to prevent internal short circuits.

The present application does not impose specific restrictions on the type of separator, and any well-known porous structure separator with good chemical and mechanical stability can be used.

In some embodiments, the material of the separator may include, but is not limited to, one or more of glass fiber, non-woven fabric, polyethylene, polypropylene, or polyvinylidene fluoride. The separator may be a single-layer film or a multilayer composite film. When the separator is a multilayer composite film, the materials of each layer may be the same or different.

The preparation method for the battery cell is well-known. In some embodiments, the positive electrode, separator, negative electrode, and electrolyte solution can be assembled to form a battery cell. In an example, the positive electrode, separator, and negative electrode may be made into an electrode assembly through a winding process and/or a lamination process; and the electrode assembly is placed in an outer package, followed by drying, and the above electrolyte solution is injected, followed by processes such as vacuum encapsulation, standing, and formation to obtain a battery cell. Multiple battery cells can be further connected in series, parallel, or a combination thereof to form a battery module. Multiple battery modules can be further connected in series, parallel, or a combination thereof to form a battery pack. In some embodiments, multiple battery cells may alternatively be directly assembled into a battery pack.

Embodiments of the present application further provide an electric apparatus including the battery provided in the embodiments of the present application. The battery may be used as a power source for the electric apparatus or as an energy storage unit for the electric apparatus. The electric apparatus may include, but is not limited to, a mobile device (for example, a mobile phone, a tablet computer, or a notebook computer), an electric vehicle (for example, a full electric vehicle, a hybrid electric vehicle, a plug-in hybrid electric vehicle, an electric bicycle, an electric scooter, an electric golf vehicle, or an electric truck), an electric train, a ship, a satellite, or an energy storage system.

The type of battery, such as a battery cell, battery module, or battery pack, may be selected depending on usage requirements of the electric apparatus.

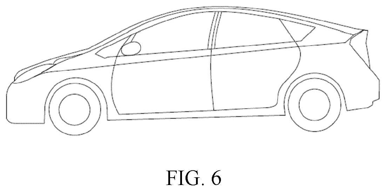

FIG. 6 is a schematic diagram of an electric apparatus as an example. The electric apparatus is a pure electric vehicle, a hybrid electric vehicle, a plug-in hybrid electric vehicle, or the like. To meet the high power and high energy density requirements of the electric apparatus, a battery pack or battery module can be used.

In another example, the electric apparatus may be a mobile phone, tablet computer, laptop, or the like. Such electric apparatuses typically required to be light and thin, and a battery cell may be used as a power source.

### Examples

The following examples describe the content disclosed in the present application in more detail, and these examples are provided solely for illustrative purposes, as various modifications and changes within the scope of the disclosure of the present application will be apparent to those skilled in the art. Unless otherwise stated, all parts, percentages, and ratios reported in the following examples are based on weight, all reagents used in the examples are commercially available or synthesized by conventional methods and can be used directly without further processing, and all instruments used in the examples are commercially available.

### Performance test

### (1) Coulombic efficiency test

In a glove box filled with argon, a metal lithium sheet was used as the counter electrode and assembled with the negative electrode current collectors prepared in each example and comparative example into a coin cell. The electrolyte salt of the electrolyte solution was LiFSI with a concentration of 1 mol/L, and the solvent of the electrolyte was a mixed solvent of dimethoxyethane (DME) and 1,1,2,2-tetrafluoroethyl-2,2,3,3-tetrafluoropropyl ether (TTE) in a weight ratio of 1:1. The separator was a PE film with a thickness of 12 µm.

At 25°C, the assembled coin cell was left to stand for 12 hours and then subjected to constant current cycling charge and discharge at a current density of 1 mA/cm² until the discharge capacity after cycling decreased to 90% of the first-cycle discharge capacity, and the test was terminated.

The first-cycle coulombic efficiency of the coin cell was calculated as follows: First-cycle coulombic efficiency = (first-cycle charge capacity / first-cycle discharge capacity) × 100%.

The average coulombic efficiency of the coin cell is the average of the coulombic efficiency per cycle.

During testing, the number of coin cell samples may be 6 or more, and the average value of the test results was taken.

### (2) Cycling performance test

Lithium iron phosphate, conductive agent carbon black (Super P), and binder polyvinylidene fluoride (PVDF) were mixed uniformly in a weight ratio of 95:1.7:3.3 in an appropriate amount of solvent N-methylpyrrolidone (NMP) to obtain a positive electrode slurry. The positive electrode slurry was coated on a positive electrode current collector aluminum foil and dried to obtain a positive electrode plate.

In a glove box filled with argon, the positive electrode plate was individually assembled with the negative electrode current collector prepared in each example and comparative example to form coin cells. The electrolyte salt of the electrolyte solution was LiFSI with a concentration of 1 mol/L, and the solvent of the electrolyte solution was a mixed solvent of dimethoxyethane (DME) and 1,1,2,2-tetrafluoroethyl-2,2,3,3-tetrafluoropropyl ether (TTE) in a weight ratio of 1:1. The separator was a PE film with a thickness of 12 µm.

At 25°C, after the assembled coin cell was left to stand for 12 hours, then charged at a constant current of 0.2C to 3.65 V, followed by constant voltage charging at 3.65 V to 0.1C. The coin cell was left to stand for 10 min, then discharged at a constant current of 1C to 2.5 V. The coin cell was cycled according to the above method until the discharge capacity after cycling was 50% of the first-cycle discharge capacity, and the number of cycles was recorded.

During testing, the number of coin cell samples may be 6 or more, and the average value of the test results was taken.

### Example 1

A commercially available two-dimensional copper foil with a thickness of 35 µm was used.

The copper foil was placed in an ion sputtering instrument, and an alloy layer was formed by vacuum magnetron sputtering to obtain the negative electrode current collector. The target was a Zn-Cu alloy target with a weight ratio of Zn to Cu of 40:60. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

### Example 2

A commercially available two-dimensional copper foil with a thickness of 35 µm was used.

The copper foil was placed in an ion sputtering instrument, and an alloy layer was formed by vacuum magnetron sputtering to obtain the negative electrode current collector. The target was a Zn-Ni alloy target with a weight ratio of Zn to Ni of 40:60. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

### Comparative Example 1

A commercially available two-dimensional copper foil with a thickness of 35 µm was used as the negative electrode current collector.

### Comparative Example 2

A commercially available two-dimensional copper foil with a thickness of 35 µm was used.

The copper foil was placed in an ion sputtering instrument, and an alloy layer was formed by vacuum magnetron sputtering to obtain the negative electrode current collector. The target was a pure Zn target. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

**Table 1**

| No. | Substrate | Alloy layer | | | | Battery performance | | | |
|---|---|---|---|---|---|---|---|---|---|
| | | Second metal | First metal | Second metal:firs t metal | Areal density (g/m²) | First-cycle coulombic efficiency (%) | Average coulombic efficiency (%) | Time to short circuit (h) | Number of cycles (cycles) |
| Example 1 | copper foil | Zn | Cu | 40:60 | 20 | 90.47 | 98.84 | 441 | 188 |
| Example 2 | copper foil | Zn | Ni | 40:60 | 20 | 90.33 | 95.34 | 234 | 112 |
| Comparative Example 1 | copper foil | / | / | / | / | 96.56 | 94.78 | 160 | 76 |
| Comparative Example 2 | copper foil | Zn | / | / | 20 | 88.64 | 95.12 | 223 | 98 |

From the test results of Examples 1, 2, and Comparative Example 1, it can be seen that by disposing an alloy layer on the substrate copper foil, the average coulombic efficiency and cycle life of the battery can be improved, and the time to short circuit can be increased, enhancing the reliability of the battery.

From the test results of Comparative Example 2, it can be seen that disposing a lithium-affinity layer composed of the second metal on the substrate surface significantly reduces the first-cycle coulombic efficiency of the battery, and as compared to Comparative Example 1, the improvements in battery reliability and cycle life are not outstanding. This is because a portion of active ions are irreversibly consumed when the second metal element forms an alloy with the deposited lithium, leading to a significant decrease in the first-cycle coulombic efficiency of the battery compared to Comparative Example 1. Moreover, due to the lack of the framework role of the first metal element of the present application in the lithium-affinity layer, the volume expansion caused by the second metal element forming an alloy with the deposited lithium cannot be suppressed. Excessive volume expansion leads to the lithium-affinity layer being unstable and prone to detachment during long-term cycling of the battery. Additionally, due to the large volume expansion of the lithium-affinity layer, issues such as the decreased internal porosity, the deteriorated wettability of the electrolyte solution, and the reduced alkali metal deposition and stripping activity may occur in the battery.

From the test results of Examples 1 and 2, it can also be seen that when the first metal element in the alloy layer is the same material as the substrate, the battery can have a higher average coulombic efficiency, longer time to short circuit, and longer cycle life. This is because the bonding strength between materials of the same type is stronger, resulting in higher adhesion between the alloy layer and the substrate, thereby enabling the alloy layer to more stably cover the substrate surface and reducing the risk of alloy layer detachment.

### Example 3

A commercially available two-dimensional nickel foil with a thickness of 35 µm was used.

The nickel foil was placed in an ion sputtering instrument, and an alloy layer was formed by vacuum magnetron sputtering to obtain the negative electrode current collector. The target was a Zn-Ni alloy target with a weight ratio of Zn to Ni of 40:60. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

### Example 4

A commercially available two-dimensional nickel foil with a thickness of 35 µm was used.

The nickel foil was placed in an ion sputtering instrument, and an alloy layer was formed by vacuum magnetron sputtering to obtain the negative electrode current collector. The target was a Zn-Cu alloy target with a weight ratio of Zn to Cu of 40:60. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

### Comparative Example 3

A commercially available two-dimensional nickel foil with a thickness of 35 µm was used as the negative electrode current collector.

### Comparative Example 4

A commercially available two-dimensional nickel foil with a thickness of 35 µm was used.

The nickel foil was placed in an ion sputtering instrument, and an alloy layer was formed by vacuum magnetron sputtering to obtain the negative electrode current collector. The target was a pure Zn target. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

**Table 2**

| No. | Substrate | Alloy layer | | | | Battery performance | | | |
|---|---|---|---|---|---|---|---|---|---|
| | | Second metal | First metal | Second metal:first metal | Areal density (g/m²) | First-cycle coulombic efficiency (%) | Average coulombic efficiency (%) | Time to short circuit (h) | Number of cycles (cycles) |
| Example 3 | Nickel foil | Zn | Ni | 40:60 | 20 | 90.15 | 97.28 | 354 | 144 |
| Example 4 | Nickel foil | Zn | Cu | 40:60 | 20 | 90.22 | 95.17 | 197 | 92 |
| Comparative Example 3 | Nickel foil | / | / | / | / | 96.71 | 94.23 | 124 | 61 |
| Comparative Example 4 | Nickel foil | Zn | / | / | 20 | 88.51 | 95.03 | 167 | 83 |

From the test results of Examples 3, 4, and Comparative Example 3, it can be seen that by disposing an alloy layer on the substrate nickel foil, the average coulombic efficiency and cycle life of the battery can be improved, and the time to short circuit can be increased, enhancing the reliability of the battery.

From the test results of Comparative Example 4, it can be seen that disposing a lithium-affinity layer composed of the second metal on the substrate surface significantly reduces the first-cycle coulombic efficiency of the battery. As compared to Comparative Example 3, the improvements in battery reliability and cycle life are not outstanding. This is because a portion of active ions are irreversibly consumed when the second metal element forms an alloy with the deposited lithium, leading to a significant decrease in the first-cycle coulombic efficiency of the battery compared to Comparative Example 3. Moreover, due to the lack of the framework role of the first metal element of the present application in the lithium-affinity layer, the volume expansion caused by the second metal element forming an alloy with the deposited lithium cannot be suppressed. Excessive volume expansion leads to the lithium-affinity layer being unstable and prone to detachment during long-term cycling of the battery. Additionally, due to the large volume expansion of the lithium-affinity layer, issues such as the decreased internal porosity, the deteriorated wettability of the electrolyte solution, and the reduced alkali metal deposition and stripping activity may occur in the battery.

From the test results of Examples 3 and 4, it can also be seen that when the first metal element in the alloy layer is the same material as the substrate, the battery can have a higher average coulombic efficiency, longer time to short circuit, and longer cycle life. This is because the bonding strength between materials of the same type is stronger, resulting in higher adhesion between the alloy layer and the substrate, thereby enabling the alloy layer to more stably cover the substrate surface and reducing the risk of alloy layer detachment.

From the test results of Examples 1 and 3, it can also be seen that when the substrate includes Cu element, the battery can have a higher average coulombic efficiency, longer time to short circuit, and longer cycle life.

### Example 5

A commercially available two-dimensional copper foil with a thickness of 35 µm was used.

The copper foil was placed in an ion sputtering instrument, and an alloy layer was formed by vacuum magnetron sputtering to obtain the negative electrode current collector. The target was an Sn-Cu alloy target with a weight ratio of Sn to Cu of 40:60. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

### Example 6

A commercially available two-dimensional copper foil with a thickness of 35 µm was used.

The copper foil was placed in an ion sputtering instrument, and an alloy layer was formed by vacuum magnetron sputtering to obtain the negative electrode current collector. The target was a Ga-Cu alloy target with a weight ratio of Ga to Cu of 40:60. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

### Example 7

A commercially available two-dimensional copper foil with a thickness of 35 µm was used.

The copper foil was placed in an ion sputtering instrument, and an alloy layer was formed by vacuum magnetron sputtering to obtain the negative electrode current collector. The target was a Ge-Cu alloy target with a weight ratio of Ge to Cu of 40:60. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

### Example 8

A commercially available two-dimensional copper foil with a thickness of 35 µm was used.

The copper foil was placed in an ion sputtering instrument, and an alloy layer was formed by vacuum magnetron sputtering to obtain the negative electrode current collector. The target was an Sb-Cu alloy target with a weight ratio of Sb to Cu of 40:60. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

**Table 3**

| No. | Alloy layer | | | | Battery performance | | | |
|---|---|---|---|---|---|---|---|---|
| | Second metal | First metal | Second metal: first metal | Areal density (g/m²) | First-cycle coulombic efficiency (%) | Average coulombic efficiency (%) | Time to short circuit (h) | Number of cycles (cycles) |
| Example 1 | Zn | Cu | 40:60 | 20 | 90.47 | 98.84 | 441 | 188 |
| Example 5 | Sn | Cu | 40:60 | 20 | 89.22 | 97.22 | 322 | 131 |
| Example 6 | Ga | Cu | 40:60 | 20 | 89.77 | 97.56 | 341 | 136 |
| Example 7 | Ge | Cu | 40:60 | 20 | 90.68 | 97.61 | 354 | 142 |
| Example 8 | Sb | Cu | 40:60 | 20 | 90.71 | 98.01 | 393 | 161 |

From the test results of Examples 1 and 5 to 8, it can be seen that different types of second metal elements have varying effects on improving battery performance.

### Example 9

A commercially available two-dimensional copper foil with a thickness of 35 µm was used.

The copper foil was placed in an ion sputtering instrument, and an alloy layer was formed by vacuum magnetron sputtering to obtain the negative electrode current collector. The target was a Zn-Cu alloy target with a weight ratio of Zn to Cu of 10:90. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

### Example 10

A commercially available two-dimensional copper foil with a thickness of 35 µm was used.

The copper foil was placed in an ion sputtering instrument, and an alloy layer was formed by vacuum magnetron sputtering to obtain the negative electrode current collector. The target was a Zn-Cu alloy target with a weight ratio of Zn to Cu of 20:80. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

### Example 11

A commercially available two-dimensional copper foil with a thickness of 35 µm was used.

The copper foil was placed in an ion sputtering instrument, and an alloy layer was formed by vacuum magnetron sputtering to obtain the negative electrode current collector. The target was a Zn-Cu alloy target with a weight ratio of Zn to Cu of 30:70. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

### Example 12

A commercially available two-dimensional copper foil with a thickness of 35 µm was used.

The copper foil was placed in an ion sputtering instrument, and an alloy layer was formed by vacuum magnetron sputtering to obtain the negative electrode current collector. The target was a Zn-Cu alloy target with a weight ratio of Zn to Cu of 50:50. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

### Example 13

A commercially available two-dimensional copper foil with a thickness of 35 µm was used.

The copper foil was placed in an ion sputtering instrument, and an alloy layer was formed by vacuum magnetron sputtering to obtain the negative electrode current collector. The target was a Zn-Cu alloy target with a weight ratio of Zn to Cu of 60:40. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

### Example 14

A commercially available two-dimensional copper foil with a thickness of 35 µm was used.

The copper foil was placed in an ion sputtering instrument, and an alloy layer was formed by vacuum magnetron sputtering to obtain the negative electrode current collector. The target was a Zn-Cu alloy target with a weight ratio of Zn to Cu of 5:95. The ion sputtering instrument was operated with a gas pressure upper limit of 1.0 MPa and a sputtering current of 30 mA. After the sputtering process began, the areal density of the alloy layer can be adjusted by controlling the sputtering time. The areal density of the alloy layer was 20 g/m².

**Table 4**

| No. | Alloy layer | | | | Battery performance | | | |
|---|---|---|---|---|---|---|---|---|
| | Second metal | First metal | Second metal:first metal | Areal density (g/m²) | First-cycle coulombic efficiency (%) | Average coulombic efficiency (%) | Time to short circuit (h) | Number of cycles (cycles) |
| Example 1 | Zn | Cu | 40:60 | 20 | 90.47 | 98.84 | 441 | 188 |
| Example 9 | Zn | Cu | 10:90 | 20 | 91.78 | 96.13 | 295 | 126 |
| Example 10 | Zn | Cu | 20:80 | 20 | 91.54 | 97.74 | 332 | 141 |
| Example 11 | Zn | Cu | 30:70 | 20 | 90.92 | 98.22 | 396 | 169 |
| Example 12 | Zn | Cu | 50:50 | 20 | 89.86 | 98.41 | 410 | 175 |
| Example 13 | Zn | Cu | 60:40 | 20 | 88.92 | 97.88 | 385 | 154 |
| Example 14 | Zn | Cu | 5:95 | 20 | 92.21 | 95.63 | 281 | 115 |

From the test results of Examples 1 and 9 to 14, it can also be seen that at the same areal density of the alloy layer, by further adjusting the weight ratio of the first metal element to the second metal element in the alloy layer, the synergistic effects of the first metal element and the second metal element can be better realized, thereby enabling the battery to have a higher average coulombic efficiency, longer time to short circuit, and longer cycle life.

### Example 15

The preparation method for the negative electrode current collector was similar to that of Example 1, except that the areal density of the alloy layer was 5 g/m² by adjusting the sputtering time.

### Example 16

The preparation method for the negative electrode current collector was similar to that of Example 1, except that the areal density of the alloy layer was 10 g/m² by adjusting the sputtering time.

### Example 17

The preparation method for the negative electrode current collector was similar to that of Example 1, except that the areal density of the alloy layer was 15 g/m² by adjusting the sputtering time.

### Example 18

The preparation method for the negative electrode current collector was similar to that of Example 1, except that the areal density of the alloy layer was 25 g/m² by adjusting the sputtering time.

### Example 19

The preparation method for the negative electrode current collector was similar to that of Example 1, except that the areal density of the alloy layer was 30 g/m² by adjusting the sputtering time.

### Example 20

The preparation method for the negative electrode current collector was similar to that of Example 1, except that the areal density of the alloy layer was 35 g/m² by adjusting the sputtering time.

**Table 5**

| No. | Alloy layer | | | | Battery performance | | | |
|---|---|---|---|---|---|---|---|---|
| | Second metal | First metal | Second metal:first metal | Areal density (g/m²) | First-cycle coulombic efficiency (%) | Average coulombic efficiency (%) | Time to short circuit (h) | Number of cycles (cycles) |
| Example 1 | Zn | Cu | 40:60 | 20 | 90.47 | 98.84 | 441 | 188 |
| Example 15 | Zn | Cu | 40:60 | 5 | 92.18 | 95.81 | 293 | 119 |
| Example 16 | Zn | Cu | 40:60 | 10 | 91.63 | 96.77 | 301 | 123 |
| Example 17 | Zn | Cu | 40:60 | 15 | 91.12 | 97.53 | 356 | 145 |
| Example 18 | Zn | Cu | 40:60 | 25 | 90.03 | 97.81 | 369 | 153 |
| Example 19 | Zn | Cu | 40:60 | 30 | 89.79 | 97.15 | 316 | 129 |
| Example 20 | Zn | Cu | 40:60 | 35 | 88.66 | 97.01 | 313 | 125 |

From the test results of Examples 1 and 15 to 20, it can also be seen that when the composition elements and ratio of the alloy layer were the same, by further adjusting the areal density of the alloy layer, the battery can have a higher average coulombic efficiency, longer time to short circuit, and longer cycle life.

It should be noted that the present application is not limited to the above embodiments. The above embodiments are merely examples, and embodiments having substantially the same configuration and achieving the same effects as the technical idea within the scope of the technical solutions of the present application are included in the technical scope of the present application. Additionally, without departing from the gist of the present application, various modifications that can be conceived by those skilled in the art and other configurations constructed by combining some constituent elements of the embodiments are also included in the scope of the present application.

## Claims

1. A negative electrode current collector, comprising a substrate and an alloy layer located on at least one side of the substrate, wherein:
the alloy layer comprises a first metal element and a second metal element, and the substrate comprises a third metal element,
the nucleation overpotential of the elemental form of the second metal element is less than the nucleation overpotential of the elemental form of the first metal element,
the nucleation overpotential for lithium metal on the elemental form of the first metal element is greater than or equal to 0.10 V, and
the nucleation overpotential of the elemental form of the second metal element is less than the nucleation overpotential of the elemental form of the third metal element.

2. The negative electrode current collector according to claim 1, wherein the first metal element is the same as the third metal element.

3. The negative electrode current collector according to claim 1 or 2, wherein the nucleation overpotential for lithium metal on the elemental form of the first metal element is 0.10 V to 0.50 V, optionally 0.10 V to 0.35 V.

4. The negative electrode current collector according to any one of claims 1 to 3, wherein:
the nucleation overpotential for lithium metal on the elemental form of the second metal element is less than 0.10 V, optionally 0.030 V to 0.095 V; and/or
the nucleation overpotential for lithium metal on the elemental form of the third metal element is 0.10 V to 0.50 V, optionally 0.10 V to 0.35 V.

5. The negative electrode current collector according to any one of claims 1 to 4, wherein the nucleation overpotential for lithium metal on the elemental form of the first metal element is denoted as V₁, the nucleation overpotential for lithium metal on the elemental form of the second metal element is denoted as V₂, and the nucleation overpotential for lithium metal on the elemental form of the third metal element is denoted as V₃, wherein
0 V < V₁ - V₂ ≤ 0.47 V, optionally 0.05 V ≤ V₁ - V₂ ≤ 0.30 V; and/or
0 V < V₃ - V₂ ≤ 0.47 V, optionally 0.05 V ≤ V₃ - V₂ ≤ 0.30 V.

6. The negative electrode current collector according to any one of claims 1 to 5, wherein:
a weight content of the first metal element in the alloy layer is 50 wt% to 90 wt%, and a weight content of the second metal element is 10 wt% to 50 wt%, and
optionally, the weight content of the first metal element in the alloy layer is 60 wt% to 70 wt%, and the weight content of the second metal element is 30 wt% to 40 wt%.

7. The negative electrode current collector according to any one of claims 1 to 6, wherein an areal density of the alloy layer is 10 g/m² to 30 g/m², optionally 15 g/m² to 25 g/m².

8. The negative electrode current collector according to any one of claims 1 to 7, wherein a ratio of an atomic radius of the first metal element to an atomic radius of the second metal element is (0.70 to 1.15):1, optionally (0.75 to 0.95):1.

9. The negative electrode current collector according to any one of claims 1 to 8, wherein:
the first metal element comprises one or more of Fe, Ni, or Cu, optionally Cu; and/or
the second metal element comprises one or more of Zn, Ag, Mg, Be, Ga, In, Ge, Sb, Sn, Pb, As, Te, or Bi, optionally comprising one or more of Zn, Ga, Ge, or Sb; and/or
the third metal element comprises one or more of Fe, Ni, or Cu, optionally Cu.

10. The negative electrode current collector according to any one of claims 1 to 9, wherein the substrate comprises one or more of a metal foil, a metal foam substrate, a metal mesh substrate, or a composite substrate, the composite substrate comprising a polymer material base layer and a metal layer formed on at least one side of the polymer material base layer, and the metal layer comprising the third metal element.

11. A battery cell comprising the negative electrode current collector according to any one of claims 1 to 10.

12. The battery cell according to claim 11, wherein the battery cell comprises at least one of a negative electrode-free lithium metal battery cell or a negative electrode-free sodium metal battery cell.

13. A battery comprising the battery cell according to claim 11 or 12.

14. An electric apparatus comprising the battery according to claim 13, wherein the battery is used to supply electrical energy.
